# EUROPÄISCHE PATENTANMELDUNG

(11) **EP 4 164 076 A1**
(43) Veröffentlichungstag der Anmeldung: **12.04.2023**
(21) Anmeldenummer: 22198608.6
(22) Anmeldetag: 29.09.2022
(51) Int. Cl.: H02G 3/08, H02G 3/18, H02G 3/14, H02G 3/12

(54) **STECKDOSE**

(30) Priorität: 05.10.2021 DE 202021105368 U
(71) Anmelder: EFB-Elektronik GmbH, 33719 Bielefeld (DE)
(72) Erfinder: Behrend, Jan, 33790 Halle/Westf. (DE); Ptoszek, Eugen, 33719 Bielefeld (DE)
(74) Vertreter: Schober, Mirko

(57) **Zusammenfassung**

Eine Steckdose (1) weist eine Wandmontageplatte (6) und eine Abdeckung (3) auf, die in Gestalt eines einen Innenraum (35) mit der Wandmontageplatte (6) bildenden Gehäuses ausgebildet ist. In dem Innenraum ist mindestens ein Keystone (5) unterbringbar. Die Abdeckung (3) umfasst eine durch einen Blendrahmen (4) verschließbare Öffnung. Der Blendrahmen (4) selbst umfasst wenigstens eine Aussparung, durch welche der im Innenraum (35) untergebrachte Keystone (5) zum Anschluss eines Kabels zugänglich ist.

## Beschreibung

Die Erfindung betrifft eine Steckdose.

Steckdosen werden üblicherweise zum Einstecken von Kabeln unterschiedlicher Art eingesetzt. So können Steckdosen zum Einstecken von Datenkabeln, HDMI Kabeln, USB-Kabeln usw. eingesetzt werden. Seit einiger Zeit sind entsprechende Aufnahmen für solche Kabelstecker als sogenannte Keystones erhältlich, sodass Steckdosen individuell mit unterschiedlichen Aufnahmen bestückt werden können. Nachteilig an bisherigen Lösungen ist es allerdings, dass die Keystones über eine bestimmte Baulänge verfügen, sodass je nach verwendetem Keystone dieser aus der Abdeckung einer Steckdose mehr oder weniger weit herausragt. Dies ist gerade dann, wenn unterschiedliche Keystones in derselben Steckdose eingesetzt werden sollen, welche alle in der Regel in der Wandmontageplatte der Steckdose verankert werden, technisch und optisch nachteilig.

Aufgabe der vorliegenden Erfindung ist es daher, eine Steckdose anzugeben, die für die Aufnahme unterschiedlicher Keystones mit unterschiedlichen Baulängen geeignet ist, bei welcher sich Keystones besonders leicht an der Steckdose anbringen lassen und bei welcher sich die Optik auch bei Aufnahme unterschiedlicher Keystones nicht verändert.

Gelöst wird diese Aufgabe durch eine Steckdose mit den Merkmalen des Anspruchs 1. Vorteilhafte Ausführungsformen finden sich in den Unteransprüchen.

Die erfindungsgemäße Steckdose weist eine Wandmontageplatte und eine Abdeckung auf, die in Gestalt eines einen Innenraum mit der Wandmontageplatte bildenden Gehäuses ausgebildet ist. In diesem Gehäuse ist mindestens ein Keystone unterbringbar. Die Abdeckung umfasst ferner eine durch einen Blendrahmen verschließbare Öffnung. Der Blendrahmen selbst umfasst wenigstens eine Aussparung, durch welche der im Innenraum untergebrachte Keystone zum Anschluss eines Kabels zugänglich ist.

Die Keystones sitzen in der erfindungsgemäßen Lösung im Blendrahmen bzw. dahinter, sodass die äußere Kontur der Steckdose unabhängig von der Form des verwendeten Keystones ist. Zudem lässt sich durch Lösen des Blendrahmens ein Keystone schnell austauschen. Dazu kann der Blendrahmen vorteilhafterweise lösbar in die Öffnung eingeclipst sein.

Der wenigstens eine Keystone kann auf unterschiedliche Weise an der Steckdose angebracht werden. Beispielsweise kann vorgesehen sein, dass der wenigstens eine Keystone mit der Wandmontageplatte und/oder dem Blendrahmen form- oder/und kraftschlüssig verbunden ist. Steckverbindungen eignen sich hier genauso wie Schraubverbindungen.

Bevorzugt ist die Abdeckung mit einem Rahmen verbunden, der die Wandmontageplatte zumindest teilweise überdeckt. Auf diese Weise wird sichergestellt, dass zum einen der optische Gesamteindruck der erfindungsgemäßen Steckdose gewahrt bleibt und zum anderen eventuell elektrisch leitende Bestandteile, zu denen die Wandmontageplatte gehören kann, vor äußerem Zugriff geschützt sind.

Nach einer besonders bevorzugten Ausführungsform der vorliegenden Erfindung umfasst die Abdeckung eine vordere Wand und eine rückseitige Wand, welche Schrägflächen aufweisen, die dachartig zusammenlaufen. Diese Dachkonstruktion hat den Vorteil, dass die Keystones schräg eingesetzt werden können und trotzdem vollständig innerhalb der Abdeckung liegen. Bevorzugt ist die Höhe der Abdeckung so bemessen, dass der wenigstens eine Keystone bündig mit der Außenseite des Blendrahmens liegt. Die dachartige Konfiguration hat zudem den Vorteil, dass die Steckdose so montiert werden kann, dass das Einstecken von Steckern in die Keystones erleichtert wird.

Ergänzend hierzu kann vorgesehen sein, dass die Öffnung, in der der Blendrahmen aufgenommen ist, von einem Rand im Bereich der Schrägfläche der vorderen Wand umgeben ist. Die Öffnung, in die die Keystones eingesetzt werden können, liegt also dann in einem schrägen Abschnitt der Wand.

Die Anzahl der unterzubringenden Keystones kann verschieden sein, entsprechend ist der Blendrahmen auszubilden. Bevorzugt ist daher vorgesehen, dass eine Mehrzahl gleicher oder verschiedener Keystones in dem Innenraum aufgenommen sind, wobei der Blendrahmen mit den Keystones numerisch und räumlich korrespondierende Aussparungen umfasst.

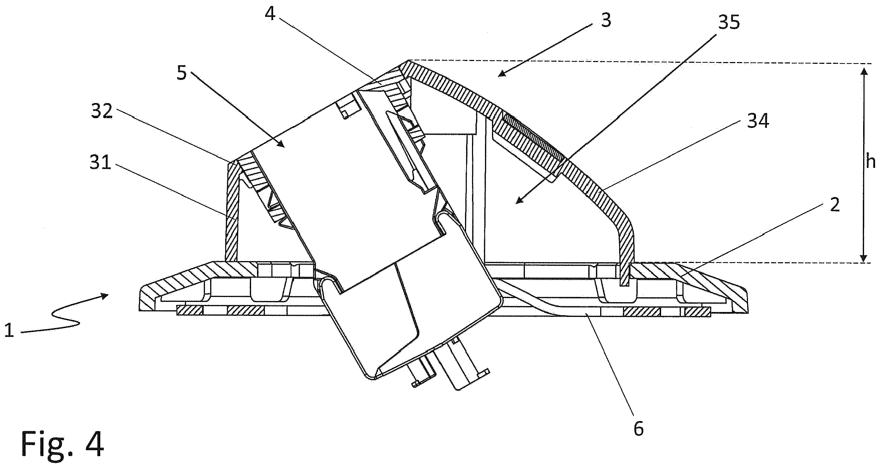

Die Erfindung wird nachfolgend anhand der Figuren 1-4 näher erläutert.
- Figuren 1-3: - zeigen unterschiedliche Ausführungsbeispiele einer erfindungsgemäßen Steckdose in perspektivischer Ansicht,
- Figur 4: - zeigt eine beispielhafte Schnittansicht durch die Steckdose gemäß Figur 3.

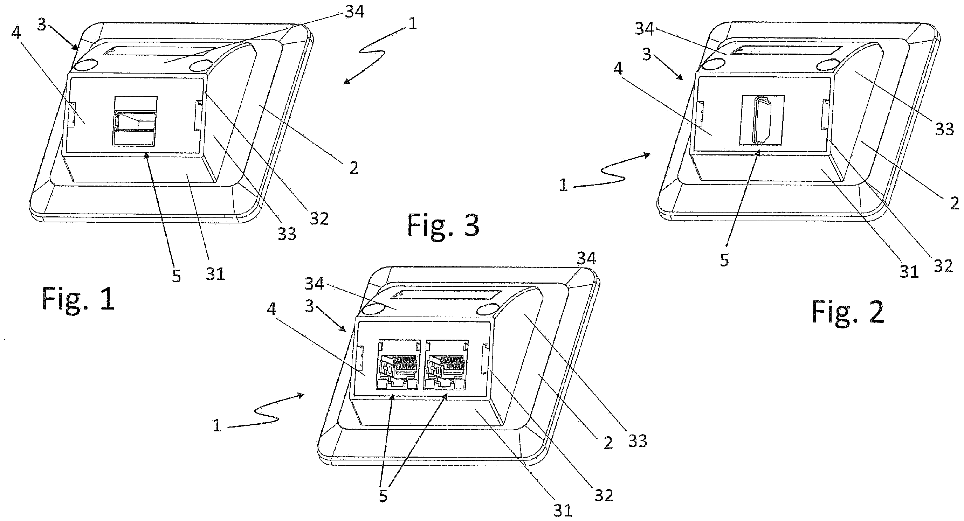

Die in Figur 1 dargestellte beispielhafte Steckdose 1 weist eine Abdeckung 3 sowie einen die Abdeckung 3 umgebenden Rahmen 2 auf. Die Abdeckung 3 weist eine vordere Wand 31, eine hintere Wand 34 sowie Seitenwände 33 auf. Innerhalb dieser Wände wird ein Innenraum gebildet, in welchen eine Keystone 5 aufgenommen werden kann. Im Beispiel der Figur 1 handelt es sich dabei beispielsweise um eine USB-Steckdose. Deren Vorderseite schließt bündig mit einem Blendrahmen 4 ab, welcher in die vordere Wand 31 eingesetzt und vom Rand 32 der vorderen Wand 31 umgeben ist. Bevorzugt ist dieser Blendrahmen 4 lösbar mit der Abdeckung verbunden. Beispielsweise kann dies durch eine Clipverbindung geschehen, die sich im gezeigten Beispiel dadurch wieder lösen lässt, dass man ein Werkzeug in die Vertiefungen einsetzt, die beidseits des Keystones 5 angeordnet sind. Die Ausführungsformen in Figur 2 unterscheiden sich von der Ausführungsform in Figur 1 lediglich dadurch, dass der dort verwendete Keystone 5 eine HDMI-Steckdose ist. Die in Figur 3 dargestellte Ausführungsform weist zwei Keystones 5 auf, entsprechend finden sich in dem Blendrahmen 4 auch zwei Aussparungen, um die Keystones 5, die im gezeigten Beispiel RJ45-Steckdosen sind, zum Einstecken des Steckers eines entsprechenden RJ45-Kabels zugänglich zu machen.

Der Aufbau der Steckdosen 1 aus den Figuren 1-3 ist nachfolgend anhand der Schnittzeichnung, die einen Schnitt durch die Steckdose 1 gemäß Figur 3 zeigt, erkennbar.

Eine Wandmontageplatte 6, bei der es sich um eine Metallplatte handelt, die für jeden Keystone 5 eine entsprechende Aussparung aufweisen kann, in welche dieser eingesteckt werden kann, ist durch den Rahmen 2 überdeckt. Auf den Rahmen 2 ist die Abdeckung 3 montiert, bevorzugt mit dieser verclipst oder verschraubt. Die vordere Wand 31 weist einen etwa vertikalen Abschnitt und einem daran angrenzenden schrägen Abschnitt auf, der hier durch den Rand 32 bzw. den die Öffnung des Keystones 5 umgebenden Blendrahmen 4 angedeutet ist. Die Öffnung des Keystones 5 ist mit diesem Rand 32 bevorzugt bündig ausgerichtet, sodass die Öffnung des Keystones 5 schräg zur Wandmontageplatte 6 bzw. schräg zur Wand verläuft, an welcher die Steckdose 1 montiert werden soll. Die rückwärtige Wand 34 ist ebenfalls mit einem schräg verlaufenden Abschnitt ausgebildet, sodass die Abdeckung 3 in dieser Schnittdarstellung eine dachartige Konfiguration erhält. Bevorzugt ist die Höhe h von der Dachspitze bis zum Rahmen 2 so ausgewählt, dass der Keystone 5 so weit in den Innenraum 35 der Abdeckung 3 hineinragt, dass er nicht mehr über die Oberfläche des Blendrahmens 4 vorsteht.

Mit der vorliegenden Erfindung lassen sich nicht nur Keystones 5 einer Sorte, sondern auch Keystones 5 unterschiedlicher Art in einer Steckdose 1 unterbringen. Herstellerseitig müssen dazu lediglich eine Sorte Wandmontageplatten 6, eine Sorte Rahmen 2 und eine Sorte Abdeckungen 3 vorgehalten und produziert werden. Es werden lediglich unterschiedliche Blendrahmen 4 benötigt, die sich sehr kostengünstig - in der Regel bestehen die Gehäuseteile der Steckdose 1 aus Kunststoff - auch auf Vorrat produzieren lassen.

## Patentansprüche

1. Steckdose (1) mit einer Wandmontageplatte (6) und einer Abdeckung (3), die in Gestalt eines einen Innenraum (35) mit der Wandmontageplatte (6) bildenden Gehäuses ausgebildet ist, in welchem mindestens ein Keystone (5) unterbringbar ist, wobei die Abdeckung (3) eine durch einen Blendrahmen (4) verschließbare Öffnung umfasst, wobei der Blendrahmen (4) selbst wenigstens eine Aussparung umfasst, durch welche der im Innenraum (35) untergebrachte Keystone (5) zum Anschluss eines Kabels zugänglich ist.

2. Steckdose (1) nach Anspruch 1,
**dadurch gekennzeichnet,**
**dass** der Blendrahmen (4) lösbar in die Öffnung eingeclipst ist.

3. Steckdose (1) nach Anspruch 1 oder 2,
**dadurch gekennzeichnet,**
**dass** der wenigstens eine Keystone (5) mit der Wandmontageplatte (6) und/oder dem Blendrahmen (4) form- oder/ und kraftschlüssig verbunden ist.

4. Steckdose (1) nach einem der vorigen Ansprüche,
**dadurch gekennzeichnet,**
**dass** die Abdeckung (3) mit einem Rahmen (2) verbunden ist, der die Wandmontageplatte (6) zumindest teilweise überdeckt.

5. Steckdose (1) nach einem der vorigen Ansprüche,
**dadurch gekennzeichnet,**
**dass** die Abdeckung eine vordere Wand (31) und eine rückseitige Wand (34) umfasst, welche Schrägflächen aufweisen, die dachartig zusammenlaufen.

6. Steckdose (1) nach Anspruch 5,
**dadurch gekennzeichnet,**
**dass** die Öffnung, in der der Blendrahmen (4) aufgenommen ist, von einem Rand (32) im Bereich der Schrägfläche der vorderen Wand (31) umgeben ist.

7. Steckdose (1) nach einem der Ansprüche 5 oder 6,
**dadurch gekennzeichnet,**
**dass** die Höhe (h) der Abdeckung so bemessen ist, dass der wenigstens eine Keystone (5) bündig mit der Außenseite des Blendrahmens (4) liegt.

8. Steckdose (1) nach einem der vorigen Ansprüche,
**dadurch gekennzeichnet,**
**dass** eine Mehrzahl gleicher oder verschiedener Keystones (5) in dem Innenraum (35) aufgenommen sind, wobei der Blendrahmen (4) mit den Keystones (5) numerisch und räumlich korrespondierende Aussparungen umfasst.
